Europäisches Patentamt

European Patent Office

Office européen des brevets

(11) Veröffentlichungsnummer: **0 399 153**
**A1**

## (12) EUROPÄISCHE PATENTANMELDUNG

(21) Anmeldenummer: 90104151.7

(22) Anmeldetag: 03.03.90

(51) Int. Cl.⁵: **H04L 7/033**

(30) Priorität: 26.05.89 DE 3917217

(43) Veröffentlichungstag der Anmeldung:
**28.11.90 Patentblatt 90/48**

(84) Benannte Vertragsstaaten:
**AT BE CH DE ES FR GB IT LI NL SE**

(71) Anmelder: **ANT Nachrichtentechnik GmbH**
**Gerberstrasse 33**
**D-7150 Backnang(DE)**

(72) Erfinder: **Thiel, Helmut, Dipl.-Ing. (FH)**
**Panoramastrasse 24**
**D-7073 Lorch(DE)**

(54) **Regenerator für Digitalsignale.**

(57) Bei der Übertragung von Digitalsignalen in der elektrischen Nachrichtentechnik, z.B. in der PCM-(Pulscodemodulation-) Multiplex-Technik werden die Digitalsignale so verzerrt, daß nach einer bestimmten Entfernung ein Regenerator erforderlich ist. Es soll ein Regenerator angegeben werden, der aus einem verzerrten unipolaren NRZ-(no return to zero) Digitalsignal ein regeneriertes Digitalsignal bildet. Das regenerierte Digitalsignal soll mit einem aus dem verzerrten Digitalsignal gewonnenen Taktsignal synchronisiert sein.

Der Regenerator weist zur Gewinnung eines Taktsignals (T) eine Phasenregelschleife auf, die einen Zeitentscheider (ZE), einen Phasendiskriminator (PD), einen Tiefpaß (TP), einen Verstärker (V) und einen spannungsgesteuerten Oszillator (VCO) umfaßt. Das verzerrte Digitalsignal (DE) wird dem Zeitentscheider (ZE) zugeführt. An seinem Ausgang erscheint das regenerierte Digitalsignal (DA), das dem Phasendiskriminator (PD) zugeführt wird. Aus dem verzerrten Digitalsignal (DE) wird durch eine Verzögerungsleitung (VL) ein verzögertes verzerrtes Digitalsignal (DV) gewonnen, das ebenfalls dem Phasendiskriminator (PD) zugeführt wird.

EP 0 399 153 A1

Fig.1

## Regenerator für Digitalsignale

Die Erfindung betrifft einen Regenerator für Digitalsignale in die elektrische Nachrichtentechnik.

Bei der Übertragung von Digitalsignalen über irgendwelche Leitungen (metallische Leiter, Lichtwellenleiter) werden die Digitalsignale so verzerrt, daß nach einer bestimmten Entfernung ein Regenerator erforderlich ist. Ein solcher Regenerator bildet aus dem empfangenen und verzerrten Digitalsignal ein regeneriertes Digitalsignal mit vorbestimmter, z.B. rechteckiger Kurvenform. Die Übertragung von Digitalsignalen wird z.B. in der Zeitmultiplextechnik, insbesondere in der PCM- (Pulscodemodulation-) Multiplextechnik angewendet.

Der Erfindung liegt folgende Aufgabe zu Grunde:

Es ist ein Regenerator für Digitalsignale anzugeben, der aus einem verzerrten unipolaren NRZ-(no return to zero-) Digitalsignal ein regeneriertes Digitalsignal bildet, wobei das regenerierte Digitalsignal mit einem aus dem verzerrten Digitalsignal gewonnene Taktsignal synchronisiert ist.

Diese Aufgabe wird durch einen Regenerator nach dem Patentanspruch 1 gelöst. Die Patentansprüche 2 bis 5 geben vorteilhafte Weiterbildungen an.

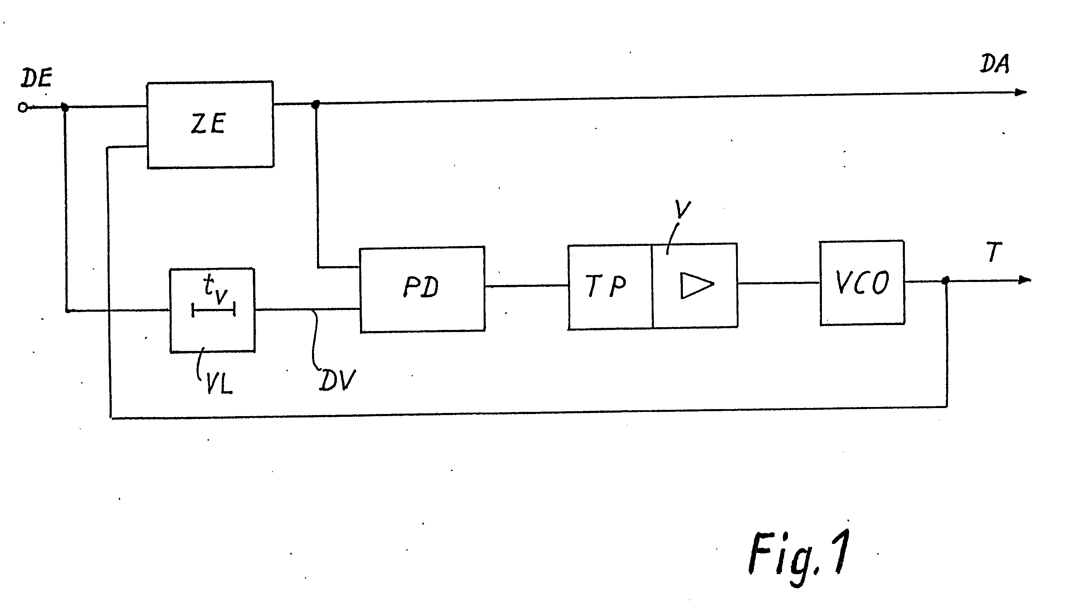

Aus der Figur 1 der deutschen Patentschrift 30 10 535 und dem zugehörigen Text ist ein Regenerator für ein unipolares Digitalsignal bekannt. Er weist einen Zeitentscheider, dort mit Flipflop FF1 bezeichnet, auf. Der Zeitentscheider weist zwei Eingänge auf. Dem ersten Eingang wird das verzerrte Digitalsignal, dem zweiten Eingang ein Taktsignal zugeführt. Jedoch wird nicht gelehrt, wie das Taktsignal gewonnen wird.

Ein weiterer Regenerator ist aus der Figur 1 und dem zugehörigen Text der deutschen Patentschrift 19 61 950 bekannt. Zur Gewinnung eines Taktsignals ist ein Taktgenerator vorgesehen, wobei die Frequenz des Taktsignals durch eine Steuerspannung verändert werden kann. Diese Steuerspannung liefert ein Phasendiskriminator über einen Tiefpaß. Der Phasendiskriminator weist einen ersten und einen zweiten Eingang auf. Dem ersten Eingang wird das Taktsignal, dem zweiten Eingang das verzerrte Digitalsignal oder ein von ihm abgeleitetes Signal zugeführt.

Ein weiterer Regenerator ist aus der deutschen Zeitschrift telcom report 2 (1979) Beiheft "Digital-Übertragungstechnik"; H. Bauch, H.G. Jungmeister, K.H. Möhrmann "Übertragung von Signalen mit 565 Mbit/s und höheren Bitraten", S. 105...109, beschrieben. Wie im Bild 1 und dem zugehörigen Text angegeben ist, weist dieser Regenerator als Zeitentscheider ein D-Flipflop und zur Gewinnung eines Taktsignals eine Phasenregelschleife mit einem spannungsgesteuerten Oszillator auf. Ferner ist zur Gewinnung des Taktsignals ein Gleichrichter vorgesehen.

Ein weiterer Regenerator ist aus dem Buch Hölzler, Thierbach "Nachrichtenübertragung, Grundlagen und Technik", Springer-Verlag, 1966, Seite 498 und 499 sowie Abb. 18 bekannt. Zur Gewinnung eines Taktsignals ist ein Generator vorgesehen, wobei die Frequenz des Taktsignals durch eine Steuerspannung verändert werden kann. Diese Steuerspannung wird über ein Differenzierglied, einem Doppelweggleichrichter und einem Schalter aus dem verzerrten Digitalsignal gewonnen.

Eine Schaltungsanordnung zur Gewinnung eines Taktsignals aus einem NRZ-Digitalsignal ist aus dem Bild 74 der Seite 84 des Buches Roland Best "Theorie und Anwendungen des Phase-locked-Loops" 3. Auflage, AT-Verlag, Aaran, Stuttgart, bekannt. Das NRZ-Digitalsignal wird differenziert, gleichgerichtet und einem Phasendetektor zugeführt. Dem Phasendetektor wird außerdem das in einem spannungsgesteuerten Oszillator erzeugte Taktsignal zugeführt. Der Phasendetektor, ein Tiefpaß und der spannungsgesteuerte Oszillator bilden einen Phasenregelkreis.

Schaltungsanordnungen, bei denen ein Digitalsignal differenziert und dann gleichgerichtet wird, sind für Digitalsignale mit hoher Bitrate nicht geeignet, weil die für die Gleichrichtung notwendigen und für die Anwendung bei hohen Bitraten geeignete Bauelemente mit nicht linearer Kennlinie nur schwierig herzustellen sind. Demgegenüber kommt der erfindungsgemäße Regenerator ohne Differenzierung und Gleichrichtung aus. Er ist deshalb auch zur Anwendung bei hohen Bitraten geeignet.

Die Erfindung wird anhand von in den Figuren 1...10 dargestellten Ausführungsbeispielen beschrieben. Die Zuordnung der Figuren und Ausführungsbeispiele zu den Patentansprüchen ist in folgender Tabelle angegeben:

2

EP 0 399 153 A1

| Ausführungsbeispiel | Figuren | Patentanspruch |
|---|---|---|
| 1 | 1 | 1 |
| 2 | 2,3,4,5 | 2 |
| 3 | 6,7,8 | 3 |
| 5 | 9 | 4 |
| 5 | 10 | 5 |

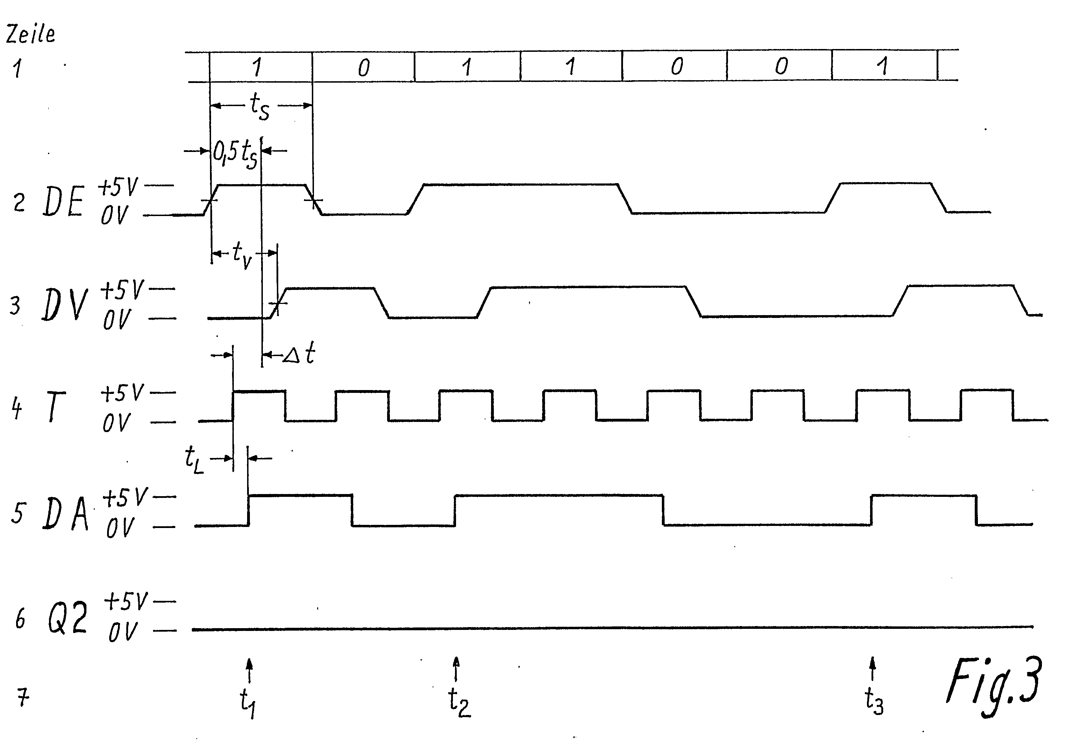

Die Figuren 1, 2, 6, 9 und 10 stellen Blockschaltbilder der jeweiligen Ausführungsbeispiele der erfindungsgemäßen Regeneratoren dar. Anhand der Figuren 3,4,5,7 und 8 wird die Funktion des jeweiligen Ausführungsbeispiels beschrieben.

Es wird zunächst das Ausführungsbeispiel 1 beschrieben. In der Figur 1 bedeuten:

DE: ein Anschluß für das verzerrte Digitalsignal sowie das verzerrte Digitalsignal selbst,

ZE: ein Zeitentscheider,

DA: ein Anschluß für das regenerierte Digitalsignal sowie das regenerierte Digitalsignal selbst,

VL: eine Verzögerungsleitung,

$t_V$: Verzögerungszeit der Verzögerungsleitung VL,

DV: ein verzögertes verzerrtes Digitalsignal,

PD: ein Phasendiskriminator,

TP: ein Tiefpaß,

V: ein Verstärker,

VCO: ein spannungsgesteuerter Oszillator,

T: ein Taktsignal sowie Anschluß für das Taktsignal.

Der Zeitentscheider ZE weist einen ersten und einen zweiten Eingang auf. Der erste Eingang ist mit dem Anschluß für das verzerrte Digitalsignal DE verbunden, dem ersten Eingang wird also das verzerrte Digitalsignal zugeführt. Dem zweiten Eingang wird das Taktsignal T zugeführt. Der Ausgang des Zeitentscheiders ZE ist mit dem Anschluß für das regenerierte Digitalsignal DA verbunden.

Der Eingang der Verzögerungsleitung VL ist ebenfalls mit dem Anschluß für das verzerrte Digitalsignal DE verbunden. An ihrem Ausgang erscheint das um die Verzögerungszeit $t_V$ verzögerte verzerrte Digitalsignal DV. Der Phasendiskriminator PD weist einen ersten und einen zweiten Eingang auf. Der erste Eingang ist mit dem Ausgang des Zeitentscheiders ZE verbunden. Der zweite Eingang ist mit dem Ausgang der Verzögerungsleitung VL verbunden.

Der Phasendiskriminator PD liefert an seinem Ausgang eine Steuerspannung, die von der Phasenverschiebung zwischen dem regenerierten Digitalsignal DA und dem verzögerten verzerrten Digitalsignal DV abhängig ist. Die Steuerspannung wird im Tiefpaß geglättet und im Verstärker V verstärkt. Mit der so gewonnenen geglätteten Steuerspannung wird die Frequenz des vom spannungsgesteuerten Oszillators VCO erzeugten Taktsignals T so beeinflußt, daß die Phasenverschiebung zwischen dem regenerierten Digitalsignal DA und dem verzögerten verzerrten Digitalsignal DV gegen Null geht.

Über den Anschluß T wird das Taktsignal T an hier nicht dargestellte Baugruppen weitergeleitet, die z.B. zur weiteren Verarbeitung des regenerierten Digitalsignals DA dieses Taktsignal benötigen.

Der Zeitentscheider ZE, der Phasendiskriminator PD, der Tiefpaß TP, der Verstärker V und der spannungsgesteuerte Oszillator VCO bilden einen Phasenregelkreis, wobei dieser Kreis durch die Leitung für das Taktsignal T vom Ausgang des spannungsgesteuerten Oszillators VCO zum zweiten Eingang des Zeitentscheiders ZE geschlossen wird.

Das Ausführungsbeispiel 2 ist eine Weiterbildung des Ausführungsbeispiels 1. Der Zeitentscheider ist durch ein erstes Flipflop FF1 und der Phasendiskriminator ist durch ein zweites Flipflop FF2 verwirklicht. Bei diesen Flipflops handelt es sich um einflankengesteuerte D-Flipflops, wobei die positive Taktflanke die wirksame Flanke ist.

Es bedeuten:

1D bzw. 2D : Dateneingänge

C1 bzw. C2 : Takteingänge

Q1 bzw. Q2 : nicht invertierende Ausgänge

$\overline{Q2}$ : invertierender Ausgang

Das verzerrte Digitalsignal DE wird dem Dateneingang 1D und das Taktsignal T wird dem Takteingang C1 des ersten Flipflops FF1 zugeführt. Am nicht invertierenden Ausgang Q1 dieses Flipflops erscheint das regenerierte Digitalsignal DA. Der Ausgang der Verzögerungsleitung VL ist mit dem Dateneingang 2D des zweiten Flipflops FF2 verbunden, d.h., diesen Dateneingang wird das verzögerte verzerrte Digitalsignal DV

3

zugeführt. Der Takteingang C2 des zweiten Flipflops FF2 ist mit dem nicht invertierenden Ausgang Q1 des ersten Flipflops FF1 verbunden. Der nicht invertierende Ausgang Q2 und der invertierende Ausgang $\overline{Q2}$ sind mit dem Tiefpaß TP verbunden.

Die Funktion wird anhand der Figur 3 beschrieben. In der Zeile 2 ist ein Ausschnitt aus dem zeitlichen Verlauf des verzerrten Digitalsignal DE dargestellt, wobei die Verzerrung durch einem trapezförmigen Kurvenverlauf angedeutet ist. Es wird ein Schaltkreissystem vorausgesetzt, bei dem log. Null durch den Spannungswert 0V und log. Eins durch den Spannungswert + 5 V ausgedrückt wird. Wie in der Zeile 1 dargestellt ist, gibt der Ausschnitt des verzerrten Digitalsignals die Bitfolge 1-0-1-1-0-0-1 wieder. Mit $t_S$ ist die Länge eines Bits bezeichnet. Wegen des trapezförmigen Kurvenverlaufs wird festgelegt, daß diese und weitere Zeitangaben von Mitte bis Mitte der jeweiligen Impulsflanke gelten. In der Zeile 2 ist durch die Angabe "0,5 $t_s$"die Mitte eines Bits bezeichnet.

In der Zeile 3 ist das verzögerte verzerrte Digitalsignal DV dargestellt. Dabei wird angenommen, daß die Verzögerungsleitung VL durch ein passives Leitungsstück, z.B. auf einer Leiterplatte, verwirklicht ist. Das verzögerte verzerrte Digitalsignal DV weist also die gleiche Kurvenform wie das verzerrte Digitalsignal DE auf und ist gegenüber diesem um die Verzögerungszeit $t_V$ der Verzögerungsleitung VL verzögert.

In der Zeile 4 ist das Taktsignal T dargestellt, wobei hier eine solche Phasenlage zum verzerrten Digitalsignal DE angenommen wurde, bei welcher die positive Flanke um die Zeit $\Delta t$ vor der Mitte des jeweiligen Bits auftritt.

In der Zeile 5 ist das regenerierte Digitalsignal DA dargestellt. Dies ist gleich dem Signal am nicht invertierenden Ausgang Q1 des ersten Flipflops FF1. Bei dem hier vorgesehenen Flipflop-Typ nimmt der nicht invertierende Ausgang immer den Signalpegel an, welcher im Augenblick der wirksamen Taktflanke am Dateneingang anliegt. Dies geschieht mit einer Verzögerung, die gleich der Signallaufzeit $t_L$ innerhalb des Flipflops ist. Mit jeder positiven Flanke des Taktsignals findet also eine Zeitentscheidung oder auch Abtastung des verzerrten Digitalsignals DE statt, und das regenerierte Digitalsignal DA ist das Ergebnis dieser Zeitentscheidung, wobei das regenerierte Digitalsignal DA in der gewünschten Weise mit dem Taktsignal T synchronisiert ist.

In der Zeile 6 ist das Signal am nicht invertierenden Ausgang Q2 des zweiten Flipflops FF2 dargestellt. Auch bei diesem Flipflop nimmt der nicht invertierende Ausgang immer den Signalpegel an, welcher im Augenblick der wirksamen Taktflanke am Dateneingang anliegt. Als Taktsignal wird diesem Flipflop das regenerierte Digitalsignal DA zugeführt. Es weist zu den in der Zeile 7 angegebenen Zeitpunkten $t_1$, $t_2$ und $t_3$ positive, also wirksame Flanken auf. Es wird hier angenommen, daß das zweite Flipflop FF2 durch einen hier nicht dargestellten Vorgang in den Zustand log. Null gesetzt wurde, wobei der nicht invertierende Ausgang Q2 den Signalpegel 0V angenommen hat.

Die Verzögerungszeit $t_V$ ist nach der Beziehung

$$t_V = 0,5\, t_S + t_L$$

bemessen. Dadurch treten die positiven Flanken des regenerierten Digitalsignals DA um die Zeit $\Delta t$ vor den positiven Flanken des verzögerten verzerrten Digitalsignals DV auf. D.h., zu den Zeitpunkten $t_1$, $t_2$ und $t_3$ weist das verzögerte verzerrte Digitalsignal DV noch den Signalpegel 0V auf, und der nicht invertierte Ausgang Q2 behält den Signalpegel 0V bei. Zu den Zeitpunkten $t_1$, $t_2$ und $t_3$ findet also ein Phasenvergleich zwischen dem verzögerten verzerrten Digitalsignal DV und dem regenerierten Digitalsignal DA statt.

Da alle Signale nur die Signalpegel 0V und + 5 V annehmen, handelt es sich um unipolare Signale.

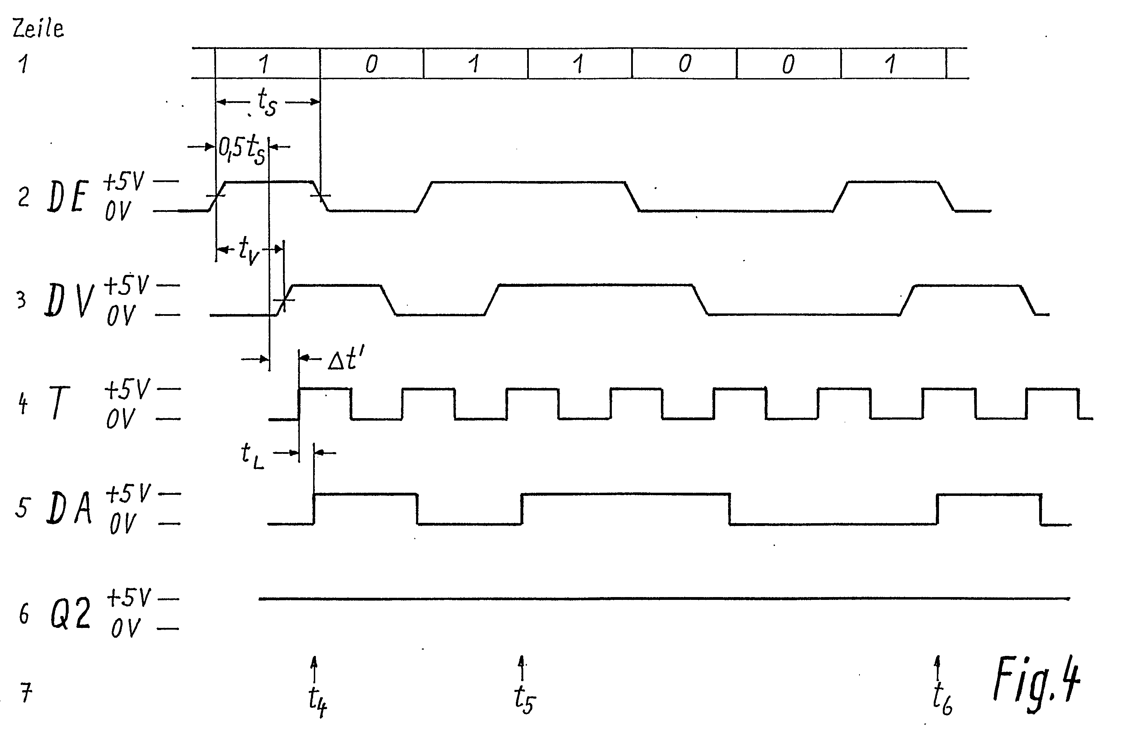

Die Figur 4 unterscheidet sich von der Figur 3 zunächst dadurch, daß für das Taktsignal T eine solche Phasenlage zum verzerrten Digitalsignal DE angenommen wurde, bei der die positive Flanke um die Zeit $\Delta t'$ nach der Mitte des jeweiligen Bits auftritt. Die Flanken des regenerierten Digitalsignals DA treten zwar wie auch in der Figur 3 dargestellt um die Signallaufzeit $t_L$ nach der jeweiligen Flanke des Taktsignals T auf; wegen der gegenüber der Figur 3 anderen Phasenlage treten die positiven Flanken des regenerieten Digitalsignals DA (Zeitpunkte $t_4$, $t_5$, $t_6$) jetzt immer dann auf, wenn das verzögerte verzerrte Digitalsignal DV schon den Signalpegel + 5 V erreicht hat. Deshalb weist der nicht invertierende Ausgang Q2 auch den Signalpegel + 5 V auf.

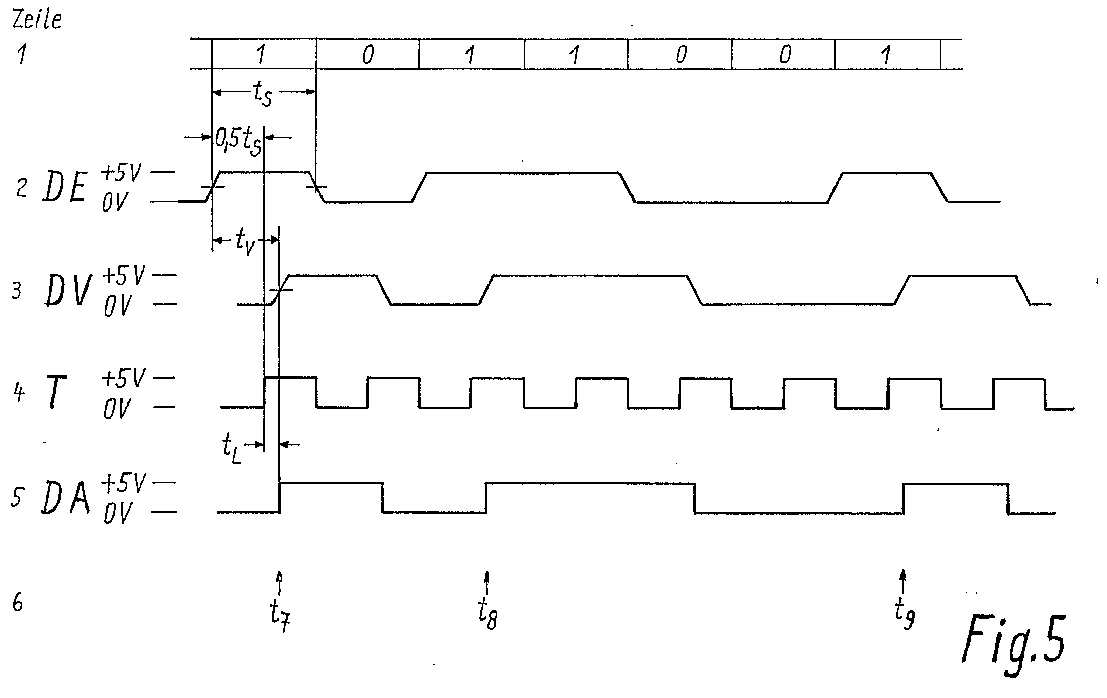

In der Figur 3 ist also die Abtastung des verzerrten Digitalsignals DE jeweils vor, in der Figur 4 nach der Mitte des jeweiligen Bits dargestellt. Bei der Verarbeitung von Digitalsignalen strebt man jedoch in der Regel die Abtastung in der Mitte des jeweiligen Bits an. Dieser Fall ist in der Figur 5 dargestellt. Die positive Flanke des Taktsignals T tritt immer gleichzeitig mit der Mitte eines jeden Bits des verzerrten Digitalsignals DE auf. Dadurch treten auch die Flanken des regenerierten Digitalssignals DA gleichzeitig mit den Flanken des verzögerten verzerrten Digitalssignals DV auf, es besteht zwischen beiden Signalen keine Phasenverschiebung. Welchen Zustand das zweite Flipflop FF2 hierbei annimmt, hängt von zufälligen kleinen Abweichungen von der hier gezeichneten idealen Phasenlage ab. Das Signal am nicht invertierenden Ausgang Q2 ist deshalb hier nicht dargestellt, es wechselt öfter zwischen den Signalpegeln + 5 V und 0V.

In der Figur 5 ist also die Soll-Phasenlage zwischen dem verzerrten Digitalsignal DE und dem Taktsignal T dargestellt. In der Figur 3 eilt das Taktsignal T dieser Soll-Phasenlage voraus, in der Figur 4 eilt es nach.

Der invertierende Ausgang $\overline{Q2}$ des zweiten Flipflops FF2 nimmt immer einen solchen Signalpegel an, der zum Signalpegel des nicht invertierenden Ausganges Q2 invers ist. Es stellen sich also folgende Signalpegel ein:

     a) bei voreilendem Taktsignal T:

Q2: 0V, $\overline{Q2}$: + 5 V

     b) bei nacheilendem Taktsignal T:

Q2: + 5 V, $\overline{Q2}$: 0V

     c) bei Sollphasenlage:

Q2 und $\overline{Q2}$: wechselnd zwischen 0V und + 5 V.

Aus den vorstehend angegebenen Signalpegeln wird über den Tiefpaß TP und dem Verstärker V eine geglättete Steuerspannung $U_{St}$ gewonnen, die den spannungsgesteuerten Oszillator VCO bezüglich der Frequenz des Taktsignals T wie folgt beeinflußt:

     a) bei voreilendem Taktsignal T :

Frequenzerniedrigung,

     b) bei nacheilendem Taktsignal T:

Frequenzerhöhung.

So wird die Soll-Phasenlage hergestellt. Die Phasenverschiebung zwischen dem verzögerten verzerrten Digitalsignal DV und dem regenerierten Digitalsignal DA geht auf diese Weise nach Null. Dies geschieht mit einem Phasenregelkreis, der aus dem ersten Flipflop FF1, dem zweiten Flipflop FF2, dem Tiefpaß TP, dem Verstärker V und dem spannungsgesteuerten Oszillator VCO, wobei dieser Kreis durch die Leitung für das Taktsignal T vom Ausgang des spannungsgesteuerten Oszillators VCO zum Takteingang C1 des ersten Flipflops FF1 geschlossen wird. Es wird zwar in diesem Phasenregelkreis die Phasenlage des Taktsignals T geregelt, es wird aber nicht die Phasenlage des Taktsignales selbst mit einem Sollwert verglichen, vielmehr wird für diesen Vergleich die Phasenlage eines vom Taktsignal abhängigen Signals, nämlich des regenerierten Digitalsignals DA, herangezogen.

In den Figuren 3 bis 5 wurde eine solche Bitfolge dargestellt, bei der mehrere Bits mit gleichem logischem Wert unmittelbar folgen. Es handelt sich hier um die Folge 1-1 und 0-0. Damit wird gezeigt, daß es sich bei dem verzerrten Digitalsignal DE und auch beim regenerierten Digitalsignal DA jeweils um ein NRZ-Signal handelt. Außerdem wird damit gezeigt, wie der Regenerator beim Auftreten solcher längeren "Einsen"-Folgen und "Nullen"-Folgen arbeitet. Es findet bei dem hier angenommenen Schaltkreissystem immer nur beim Wechsel von Null auf Eins (Zeitpunkte $t_1$, $t_2$ und $t_3$) ein Phasenvergleich statt.

Im zuvor beschriebenen Ausführungsbeispiel ist die Abtastung des verzerrten Digitalsignales jeweils in der Mitte eines Bits vorgesehen. Dem entsprechend erscheint in der Formel zur Berechnung der Verzögerungszeit $t_v$ der Faktor 0,5. Soll jedoch außerhalb der Bitmitte abgetastet werden, ist der Faktor 0,5 durch den Faktor a zu ersetzen, so daß die Beziehung lautet:

$$t_v = a\, t_S + t_L$$

Der Faktor a ist entsprechend dem gewünschten Abtastzeitpunkt zu wählen, wobei Faktoren zwischen 0 und kleiner als 0,5 zu einer Abtastung vor der Bitmitte, Faktoren größer als 0,5 bis kleiner 1 zu einer Abtastung nach der Bitmitte führen.

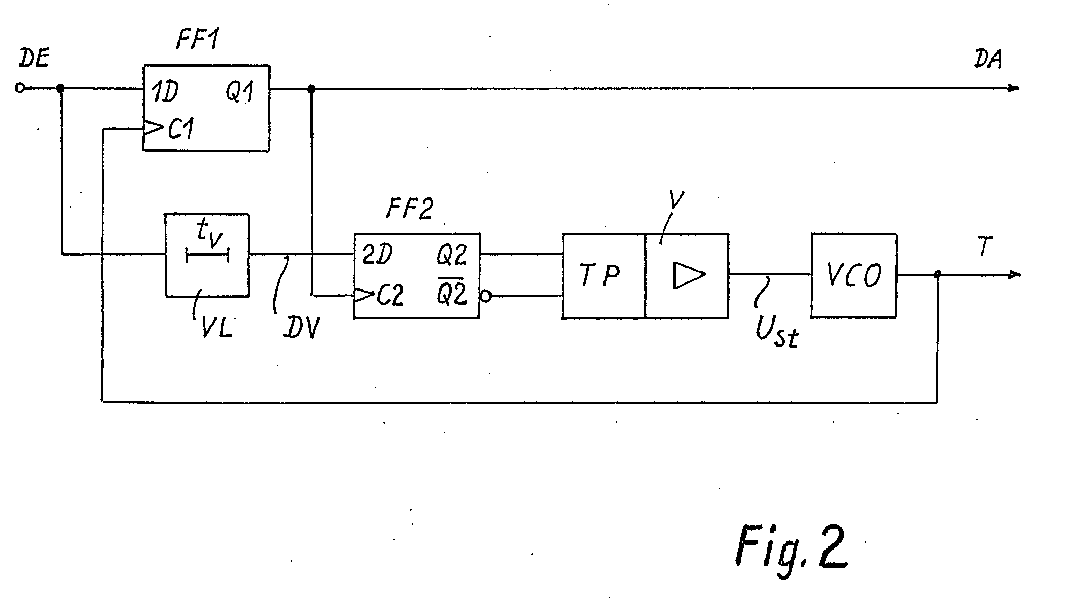

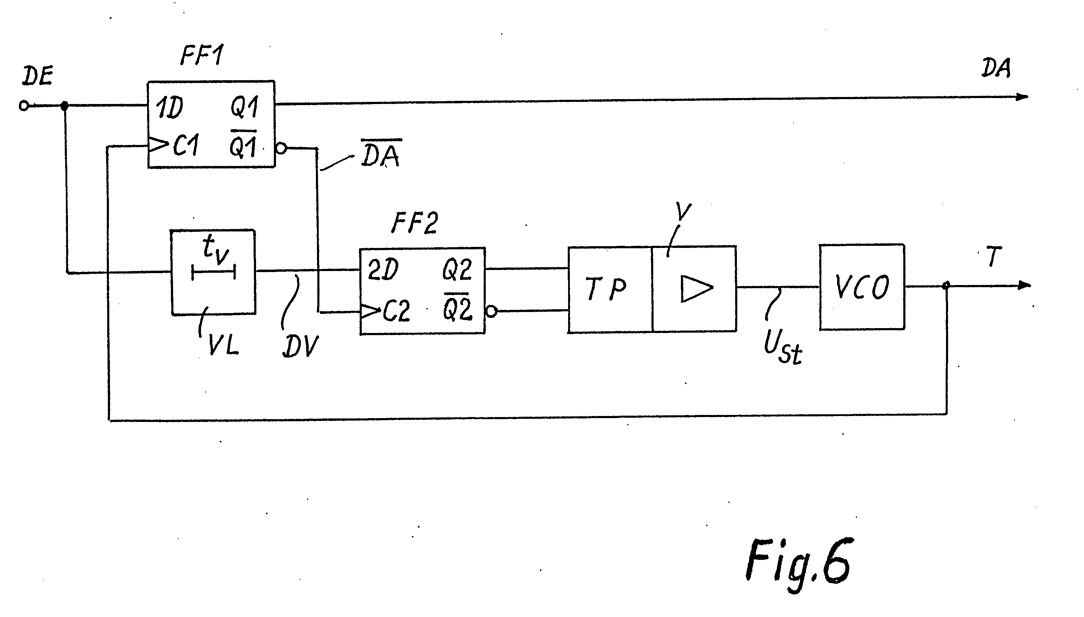

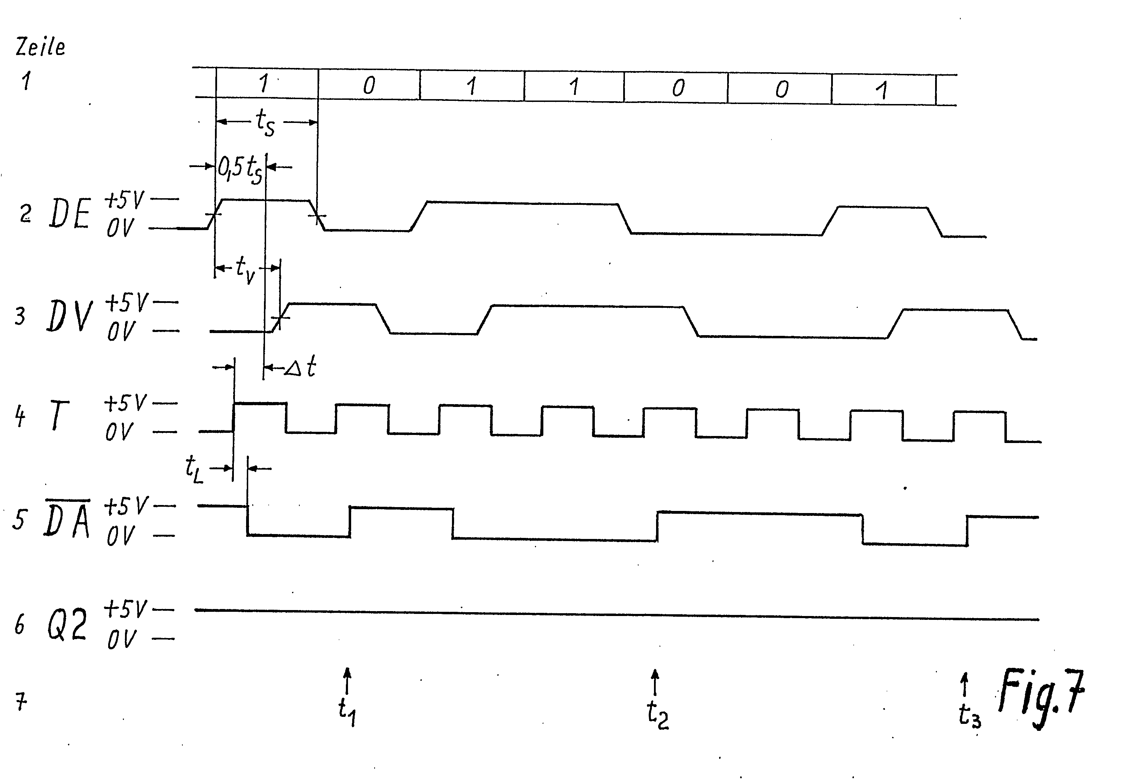

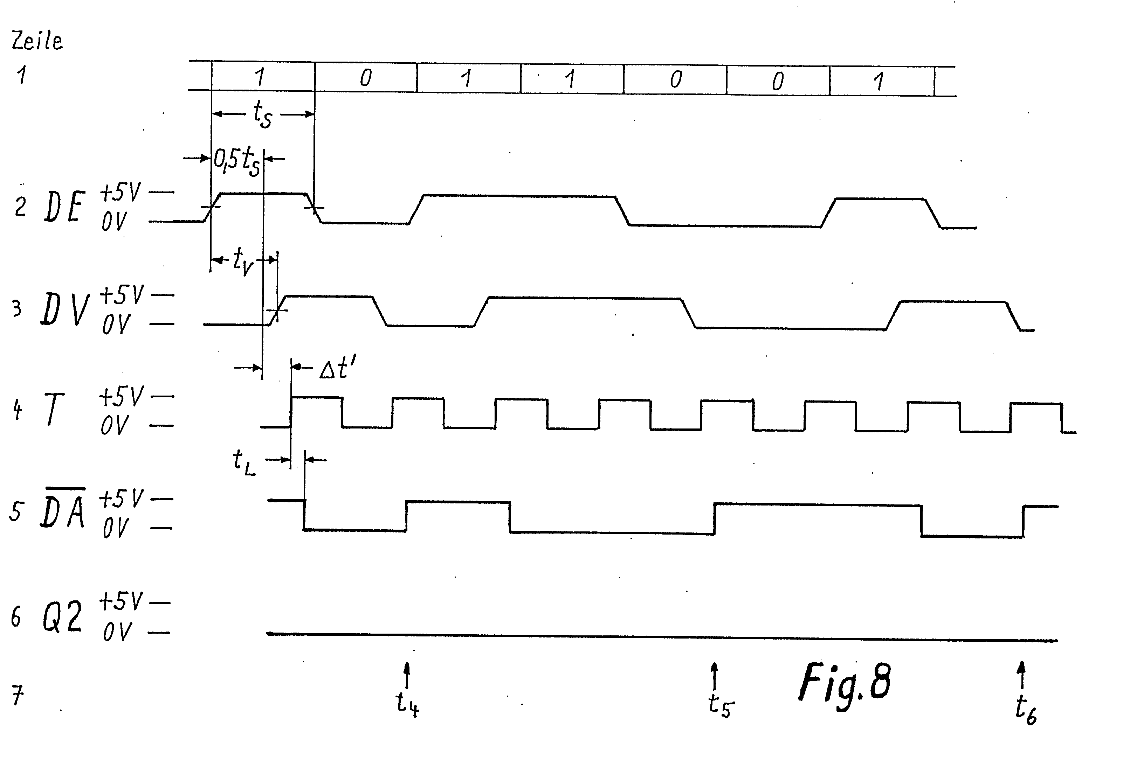

Das Ausführungsbeispiel 3 (Figur 6) unterscheidet sich vom Ausführungsbeispiel 2 (Figur 2) dadurch, daß der Takteingang C2 des zweiten Flipflops FF2 mit dem invertierenden Ausgang $\overline{Q1}$ des ersten Flipflops FF1 verbunden ist. An diesem Ausgang erscheint ein zum regenerierten Digitalsignal DA inverses Signal, das invertierte regenerierte Digitalsignal $\overline{DA}$. Dadurch ergibt sich eine Funktion, die von der des Ausführungsbeispiels 2 etwas abweicht und anhand der Figuren 7 und 8 erläutert wird. In der Figur 7 ist der Fall des voreilenden Taktsignals T behandelt, so daß hier der Text zur Figur 3 sinngemäß gilt. Anstelle des regenerierten Digitalsignals DA ist jedoch das invertierte regenerierte Digitalsignal $\overline{DA}$ dargestellt. Bei jeder positiven Flanke dieses Signals nimmt der nicht invertierende Ausgang Q2 den dann gerade auftretenden Signalpegel des verzögerten verzerrten Digitalsignals DV an. Dies ist zu den Zeitpunkten $t_1$, $t_2$ und $t_3$ der Fall. Zu diesen Zeitpunkten weist das verzögerte verzerrte Digitalsignal den Signalpegel + 5 V auf. Deshalb nimmt der nicht invertierende Ausgang Q2 ebenfalls den Signalpegel + 5 V an.

In der Figur 8 ist der Fall des nacheilenden Taktsignals T dargestellt. Es gilt hier der Text zur Figur 4 sinngemäß. Zu den Zeitpunkten $t_4$, $t_5$ und $t_6$, an denen die positiven Flanken des invertierten regenerierten Digitalsignals $\overline{DA}$ auftreten, weist das verzögerte verzerrte Digitalsignal DV den Signalpegel 0V auf. Deshalb nimmt der nicht invertierende Ausgang Q2 ebenfalls den Signalpegel 0V an.

Die Zuordnung der Signalpegel am nicht invertierenden Ausgang Q2 zu der jeweiligen Phasenlage des Taktsignals ist also umgekehrt gegenüber der beim Ausführungsbeispiel 2. Dies ist bei der Ausgestaltung des Verstärkers V oder des spannungsgesteuerten Oszillators VCO in der Weise berücksichtigt, daß auch im Ausführungsbeispiel 3 die Phasenverschiebung zwischen verzögerten verzerrten Digitalsignal DV und dem regenerierten Digitalsignal DA nach Null geht.

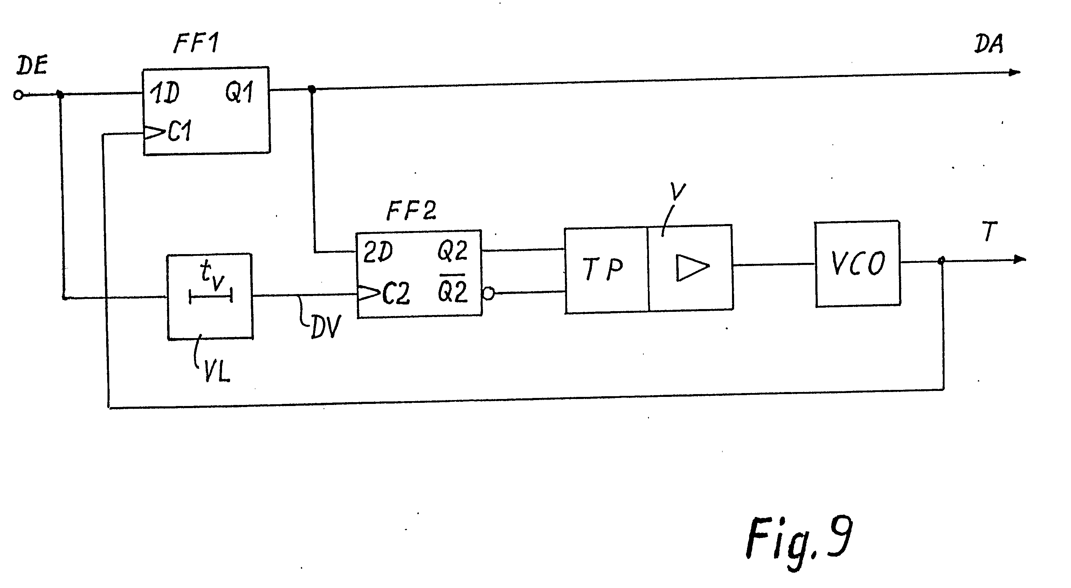

Das Ausführungsbeispiel 4 (Figur 9) unterscheidet sich vom Ausführungsbeispiel 2 dadurch, daß die Signale am Dateneingang 2D und am Takteingang C2 des zweiten Flipflops FF2 vertauscht sind. Dem Dateneingang 2D wird das regenerierte Digitalsignal DA und dem Takteingang C2 das verzögerte verzerrte Digitalsignal DV zugeführt unter Berücksichtigung dieses Unterschiedes gilt der Text zum Ausführungsbeispiel 2 hier sinngemäß.

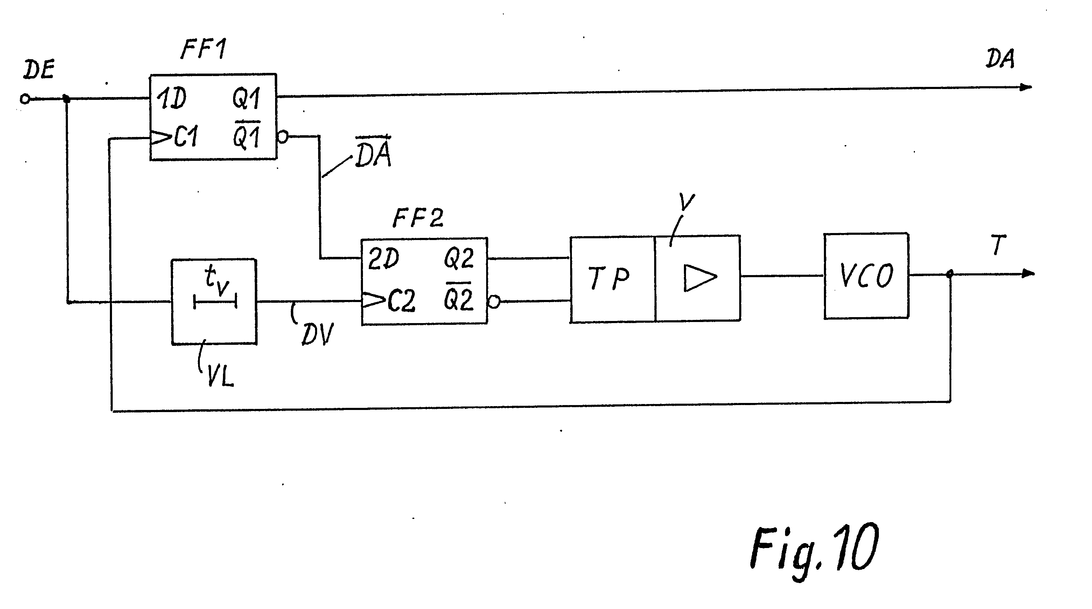

Das Ausführungsbeispiel 5 (Figur 10) unterscheidet sich vom Ausführungsbeispiel 3 dadurch, daß die Signale am Dateneingang 2D und am Takteingang C2 des zweiten Flipflops FF2 vertauscht sind. Dem Dateneingang 2D wird das invertierte regenerierte Digitalsignal $\overline{DA}$ und dem Takteingang C2 das verzögerte verzerrte Digitalsignal DV zugeführt unter Berücksichtigung dieses Unterschieds gilt der Text zum Ausführungsbeispiel 3 hier sinngemäß.

## Ansprüche

1. Regenerator für Digitalsignale mit folgenden Merkmalen:

a) Der Regenerator weist einen Anschluß für das verzerrte Digitalsignal (DE, Fig. 1), einen Zeitentscheider (ZE), eine Verzögerungsleitung (VL), einen Phasendiskriminator (PD), einen Tiefpaß (TP), einen spannungsgesteuerten Oszillator (VCO) sowie einen Anschluß für das regenerierte Digitalsignal (DA) auf.

b) Der Zeitentscheider (ZE) weist einen ersten und einen zweiten Eingang sowie einen Ausgang auf.

b1) Der erste Eingang des Zeitentscheiders (ZE) ist mit dem Anschluß für das verzerrte Digitalsignal (DE) verbunden.

b2) Der Ausgang des Zeitentscheiders (ZE) ist mit dem Anschluß für das regenerierte Digitalsignal (DA) verbunden.

c) Der Phasendiskriminator (PD) weist einen ersten und einen zweiten Eingang sowie einen Ausgang auf.

c1) Der erste Eingang des Phasendiskriminators (PD) ist mit dem Ausgang des Zeitentscheiders (ZE) verbunden.

d) Der Eingang der Verzögerungsleitung (VL) ist mit dem Anschluß für das verzerrte Digitalsignal (DE) verbunden.

e) Der Ausgang der Verzögerungsleitung (VL) ist mit dem zweiten Eingang des Phasendiskriminators (PD) verbunden.

f) Der Ausgang des Phasendiskriminators (PD) ist mit dem Eingang des Tiefpasses (TP) verbunden.

g) Der Ausgang des Tiefpasses (TP) ist mit einem Steuereingang des spannungsgesteuerten Oszillators (VCO) verbunden.

h) Der Ausgang des spannungsgesteuerten Oszillators (VCO) ist mit zweiten Eingang des Zeitentscheiders (ZE) verbunden.

i) Der spannungsgesteuerte Oszillator (VCO) ist so ausgebildet, daß er an seinem Ausgang ein Taktsignal (T) abgibt, wobei dessen Frequenz von der am Steuereingang liegenden Steuerspannung abhängt.

k) Der aus dem Zeitentscheider (ZE), Phasendetektor (PD), Tiefpaß (TP) und spannungsgesteuertem Oszillator (VCO) gebildete Phasenregelkreis ist so ausgebildet, daß die Phasenverschiebung zwischen dem regenerierten Digitalsignal (DA) und dem durch die Verzögerungsleitung (VL) verzögerten verzerrten Digitalsignal DV zu Null wird.

2. Regenerator nach Anspruch 1, gekennzeichnet durch folgende Merkmale:

a) Der Zeitentscheider (ZE) ist durch ein erstes Flipflop (FF1, Figur 2) verwirklicht.

b) Der Phasendiskriminator (PD) ist durch ein zweites Flipflop (FF2) verwirklicht.

c) Das erste (FF1) und das zweite (FF2) Flipflop sind als D-Flipflops ausgeführt.

d) Der Anschluß für das verzerrte Digitalsignal (DE) ist mit dem Dateneingang (1D) des ersten Flipflops (FF1) verbunden.

e) Der nicht invertierende Ausgang (Q1) des ersten Flipflops (FF1) ist mit dem Anschluß für das regenerierte Digitalsignal (DA) und mit dem Takteingang (C2) des zweiten Flipflops (FF2) verbunden.

f) Der Ausgang der Verzögerungsleitung (VL) ist mit dem Dateneingang (2D) des zweiten Flipflops (FF2) verbunden.

g) Der Ausgang des spannungsgesteuerten Oszillators (VCO) ist mit dem Takteingang (C1) des ersten Flipflops (FF1) verbunden.

3. Regenerator nach Anspruch 1, gekennzeichnet durch folgende Merkmale:

a) Der Zeitentscheider ist durch ein erstes Flipflop (FF1, Fig. 6) verwirklicht.

b) Der Phasendiskriminator ist durch ein zweites Flipflop (FF2) verwirklicht.

c) Das erste (FF1) und das zweite (FF2) Flipflop sind als D-Flipflops ausgeführt.

d) Der Anschluß für das verzerrte Digitalsignal (DE) ist mit dem Dateneingang (1D) des ersten Flipflops (FF1) verbunden.

e) Der nicht invertierende Ausgang (Q1) des ersten Flipflops (FF1) ist mit dem Anschluß für das regenerierte Digitalsignal (DA) verbunden.

f) Der invertierende Ausgang ($\overline{Q1}$) des ersten Flipflops (FF1) ist mit dem Takteingang (C2) des zweiten Flipflops (FF2) verbunden.

g) Der Ausgang der Verzögerungsleitung (VL) ist mit dem Dateneingang (2D) des zweiten Flipflops (FF2) verbunden.

h) Der Ausgang des spannungsgesteuerten Oszillator (VCO) ist mit dem Takteingang (C1) des ersten Flipflops (FF1) verbunden.

4. Regenerator nach Anspruch 1, gekennzeichnet durch folgende Merkmale:

a) Der Zeitentscheider (ZE) ist durch ein erstes Flipflop (FF1, Figur 9) verwirklicht.

b) Der Phasendiskriminator (PD) ist durch ein zweites Flipflop (FF2) verwirklicht.

c) Das erste (FF1) und das zweite (FF2) Flipflop sind als D-Flipflops ausgeführt.

d) Der Anschluß für das verzerrte Digitalsignal (DE) ist mit dem Dateneingang (1D) des ersten Flipflops (FF1) verbunden.

e) Der nicht invertierende Ausgang (Q1) des ersten Flipflops (FF1) ist mit dem Anschluß für das regenerierte Digitalsignal (DA) und mit dem Dateneingang (2D) des zweiten Flipflops (FF2) verbunden.

f) Der Ausgang der Verzögerungsleitung (VL) ist mit dem Takteingang (C2) des zweiten Flipflops (FF2) verbunden.

g) Der Ausgang des spannungsgesteuerten Oszillators (VCO) ist mit dem Takteingang (C1) des ersten Flipflops (FF1) verbunden.

5. Regenerator nach Anspruch 1, gekennzeichnet durch folgende Merkmale:

a) Der Zeitentscheider ist durch ein erstes Flipflop (FF1, Fig. 10) verwirklicht.

b) Der Phasendiskriminator ist durch ein zweites Flipflop (FF2) verwirklicht.

c) Das erste (FF1) und das zweite (FF2) Flipflop sind als D-Flipflops ausgeführt.

d) Der Anschluß für das verzerrte Digitalsignal (DE) ist mit dem Dateneingang (1D) des ersten Flipflops (FF1) verbunden.

e) Der nicht invertierende Ausgang (Q1) des ersten Flipflops (FF1) ist mit dem Anschluß für das regenerierte Digitalsignal (DA) verbunden.

f) Der invertierende Ausgang ($\overline{Q1}$) des ersten Flipflops (FF1) ist mit dem Dateneingang (2D) des zweiten Flipflops (FF2) verbunden.

g) Der Ausgang der Verzögerungsleitung (VL) ist mit dem Takteingang (C2) des zweiten Flipflops (FF2) verbunden.

h) Der Ausgang des spannungsgesteuerten Oszillator (VCO) ist mit dem Takteingang (C1) des ersten Flipflops (FF1) verbunden.

Fig.1

BK 88/100

Fig. 2

BK88/100

Fig.3

Fig.4

Zeile

| 1 | 1 | 0 | 1 | 1 | 0 | 0 | 1 | |

$t_S$

$0{,}5t_S$

2 $DE$ $\begin{array}{c}+5V\\0V\end{array}$

$t_V$

3 $DV$ $\begin{array}{c}+5V\\0V\end{array}$

4 $T$ $\begin{array}{c}+5V\\0V\end{array}$

$t_L$

5 $DA$ $\begin{array}{c}+5V\\0V\end{array}$

6

$t_7$     $t_8$     $t_9$

Fig.5

EP 0 399 153 A1

Fig.6

EP 0 399 153 A1

Fig.7

Fig.8

Fig.9

EP 0 399 153 A1

Fig. 10

EP 0 399 153 A1

Europäisches
Patentamt

**EUROPÄISCHER RECHERCHENBERICHT**

Nummer der Anmeldung

EP 90 10 4151

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 290 851 (YAMAGUCHI) * Seite 3, Zeile 41 - Seite 4, Zeile 9 * | 1 | H 04 L 7/033 |
| A | | 2-5 | |
| X | EP-A-0 286 329 (GIGABIT) * Seite 1, Zeilen 41-51 * | 1 | |
| A | | 2-5 | |
| A | PATENT ABSTRACTS OF JAPAN, Band 7, Nr. 276 (E-215)[1421], 9. Dezember 1983; & JP-A-58 156 247 (MATSUSHITA DENKI SANGYO K.K.) 17-09-1983 | 1-5 | |
| A | EP-A-0 010 077 (TELEFONAKTIEBOLAGET L.M. ERICSSON) * Zusammenfassung * | 1-5 | |

**RECHERCHIERTE SACHGEBIETE (Int. Cl.5)**

H 04 L

Der vorliegende Recherchenbericht wurde für alle Patentansprüche erstellt

| Recherchenort | Abschlußdatum der Recherche | Prüfer |
|---|---|---|
| DEN HAAG | 22-08-1990 | VERSLYPE J.P. |